(19) Europäisches Patentamt
European Patent Office
Office européen des brevets

(11) **EP 4 068 191 B1**

(12) **EUROPEAN PATENT SPECIFICATION**

(45) Date of publication and mention
of the grant of the patent:
**17.06.2026 Bulletin 2026/25**

(21) Application number: **22166256.2**

(22) Date of filing: **01.04.2022**

(51) International Patent Classification (IPC):
**G06Q 30/08** *(2012.01)*

(52) Cooperative Patent Classification (CPC):
**G06Q 40/04**

(54) **SYSTEM AND METHOD FOR PROCESSING BID OFFERS USING A MINIMUM IMPROVEMENT VALUE**

SYSTEM UND VERFAHREN ZUM VERARBEITEN VON ANGEBOTEN UNTER VERWENDUNG EINES MINIMALEN VERBESSERUNGSWERTES

SYSTÈME ET PROCÉDÉ DE TRAITEMENT D'OFFRES À L'AIDE D'UNE VALEUR D'AMÉLIORATION MINIMUM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.04.2021 IN 202121015797**

(43) Date of publication of application:
**05.10.2022 Bulletin 2022/40**

(73) Proprietor: **Indian Oil Corporation Limited Mumbai, Maharashtra 400 051 (IN)**

(72) Inventors:
• **BHARGAVA, Aseem**
  **110049 New Delhi (IN)**
• **MANDAL, Sabyasachi**
  **110049 New Delhi (IN)**

(74) Representative: **Ponti & Partners, S.L.P**
**Edifici PRISMA**
**Av. Diagonal núm. 611-613, Planta 2**
**08028 Barcelona (ES)**

(56) References cited:
**WO-A1-02/42981       WO-A2-2006/019986**
**US-A1- 2013 218 708   US-A1- 2014 172 614**
**US-A1- 2016 232 603**

Description

## FIELD OF THE INVENTION

The present invention generally relates to processing bid offers for petroleum products trading and more particularly relates to system and method for smart forward/reverse auctioning by processing bid offers based on determination of a real-time minimum improvement value in petroleum products trading taking into consideration multiple factors, without disclosing best price.

## BACKGROUND

Traditionally, there is no known case of auction being used in the petroleum products trading/market across the globe, as per information from actual oil traders. Moreover, the submission of bid offers and majority of the calculations related to bid offers and revision of bid offers are performed manually. In bid offers, a net delivered price per unit or weighted average net delivered price per unit (best offer vs other than best offer) is required to be determined which may be a complex calculation due to involvement of multiple factors which may be different in different offers received. Such calculation is also performed manually by the parties involved in tendering/bid submission processes.

Further, in conventional techniques of auctioning in petroleum domain, the currently available online portals generally display the best bid as received, thereby disclosing the actual offer received from different parties. Also, in case of a tied offer, there may be two major extremes in information, which lead to distinct theories, viz the 'private values', which means bidders know their own value, and 'common values' (i.e., best value), in which bidders don't know their own value but have some indication or signal about the value in case of a tie. If we have a value 'v' and another bidder is about to win at a price 'pa < v', one might as well accept a price 'pb' between the two such that 'pa < pb < v' because a purchase at this price would provide also with a profit. This strategy is a dominant strategy for each private value bidder because no matter what strategy the other bidders adopt, bidding up to value is the strategy that maximizes the profit for each bidder. All such currently known processes are flexible systems of bid increments. The currently known techniques of auctioning are generally too transparent, since the exact bids are displayed by the auctioning portals and all parties may be able to view the currently provided highest bid price. Such transparency may not be suitable for companies inviting bid offers for tenders where confidentiality of bids is required to be maintained. Additionally, for finalizing the e-tenders involving auctioning system, the time taken by currently available portals is much higher, ranging from 7 to 10 hours.

Accordingly, there is a need for a methodology to address at least the above challenges related to transparency as well as bids confidentiality by auctioning portals and the time duration for finalizing the tendering process as mentioned above.

US 2014/0172614 A1 describes a method for conducting auctions in a networked environment by providing a forum to conduct the auctions and determining either a default bid increment or a dynamic bid increment that is deemed more optimal that the default bid increment.

WO 2002/042981 A1 describes a system for conducting auctions where a plurality of bids are received and a bid improvement rule is implemented which determines whether at least one combination of new bids from a bidder satisfies a relation with respect to prior bids from the same bidder.

US 2016/232603 A1 describes a method for enabling a bidder to participate in an auction. A rationing rule is used to determine allocation of an item and clear the auction. The rationing rule may give priority to different bidders or bids.

WO 2006/019986 A2 describes handling of securities orders in an auction market based on buy orders and published best bids.

US 2013/218708 A1 describes online auction systems in which a revision event is detected and a bid increment is calculated based on current price and target price of an item to be auctioned.

## SUMMARY

This summary is provided to introduce a selection of concepts, in a simplified format, that are further described in the detailed description of the invention. This summary is neither intended to identify key or essential inventive concepts of the invention and nor is it intended for determining the scope of the invention.

According to one embodiment of the present disclosure, a system to process bid offers based on a minimum improvement value is described. The system comprises a registration module to register a plurality of users for receiving bid offers associated with a tender. Further, the system comprises a tender creation module to create the tender based on one or more input parameters received from the plurality of users. Furthermore, the system comprises a bid processing module to receive a plurality of bid offers from the plurality of users for the tender, and identify at least two bid offers, from the plurality of bid offers, based on a net delivered price value corresponding to each of the plurality of bid offers. Additionally, the system comprises an auctioning module to send an invite to at least two users associated with the at least two bid offers related to the tender for auction; determine, for each of the at least two users, the minimum improvement value based on the bid offer of the corresponding user, a best bid offer among the at least two bid offers, and a predefined improvement factor, to be provided to each of the at least two users, wherein the predefined improvement factor is indicative of a minimum change required in the bid offer to match the best bid offer in the auction; receive, from a user of the at least two users, a revised bid offer based on the minimum improvement value; and determine, for each of the at least two users, a revised minimum improvement value based on the revised bid offer received from the user to receive another revised bid offer from the at least two users.

According to another embodiment of the present disclosure, a method for processing bid offers based on a minimum improvement value is described. The method comprises registering a plurality of users for receiving bid offers associated with a tender. Further, the method comprises creating the tender based on one or more input parameters received from the plurality of users. Furthermore, the method comprises receiving a plurality of bid offers from the plurality of users for the tender. Additionally, the method comprises identifying bid offers, from the plurality of bid offers, based on a net delivered price value corresponding to each of the plurality of bid offers. Moreover, the method comprises sending an invite to at least two users associated with the at least two bid offers related to the tender for auction. In addition, the method comprises determining, for each of the at least two users, the minimum improvement value based on the bid offer of the corresponding user, a best bid offer among the at least two bid offers, and a predefined improvement factor, to be provided to each of the at least two users, wherein the predefined improvement factor is indicative of a minimum change required in the bid offer to match the best bid offer in the auction. Further, the method comprises receiving, from a user of the at least two users, a revised bid offer based on the minimum improvement value. Still further, the method comprises determining, for each of the at least two users, a revised minimum improvement value based on the revised bid offer received from the user to receive another revised bid offer from the at least two users.

To further clarify the advantages and features of the present invention, a more particular description of the invention will be rendered by reference to specific embodiments thereof, which is illustrated in the appended drawings. The invention will be described and explained with additional specificity and detail with the accompanying drawings.

## BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:

Figure 1 illustrates a schematic block diagram of a system for processing of bid offers, according to an embodiment of the present invention;

Figure 2 illustrates a schematic block diagram of modules of the system for processing of bid offers, according to an embodiment of the present invention;

Figures 3A and 3B illustrate an exemplary process flow depicting a method 300 for processing of bid offers based on a minimum improvement value, according to an embodiment of the present invention;

Figure 4 illustrates an image depicting an interface of a forward auction, in accordance with an embodiment of the present invention;

Figure 5 illustrates an image depicting an interface of a reverse auction, in accordance with an embodiment of the present invention; and

Figure 6 illustrates an image depicting scenarios 1 through IV for a number of offers, in accordance with an embodiment of the present invention.

Further, skilled artisans will appreciate that elements in the drawings are illustrated for simplicity and may not have necessarily been drawn to scale. For example, the flow charts illustrate the method in terms of the most prominent steps involved to help to improve understanding of aspects of the present invention. Furthermore, in terms of the construction of the device, one or more components of the device may have been represented in the drawings by conventional symbols, and the drawings may show only those specific details that are pertinent to understanding the embodiments of the present invention so as not to obscure the drawings with details that will be readily apparent to those of ordinary skill in the art having benefit of the description herein.

## DETAILED DESCRIPTION OF FIGURES

For the purpose of promoting an understanding of the principles of the invention, reference will now be made to the embodiment illustrated in the drawings and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates. Unless otherwise defined, all technical and scientific terms used herein have the same meaning as commonly understood by one of ordinary skilled in the art to which this invention belongs.

For example, the term "some" as used herein may be understood as "none" or "one" or "more than one" or "all." Therefore, the terms "none," "one," "more than one," "more than one, but not all" or "all" would fall under the definition of "some."

For example, any terms used herein such as, "includes," "comprises," "has," "consists," and similar grammatical variants do not specify an exact limitation or restriction, and certainly do not exclude the possible addition of one or more features or elements, unless otherwise stated. Further, such terms must not be taken to exclude the possible removal of one or more of the listed features and elements, unless otherwise stated, for example, by using the limiting language including, but not limited to, "must comprise" or "needs to include."

Whether or not a certain feature or element was limited to being used only once, it may still be referred to as "one or more features" or "one or more elements" or "at least one feature" or "at least one element." Furthermore, the use of the terms "one or more" or "at least one" feature or element do not preclude there being none of that feature or element, unless otherwise specified by limiting language including, but not limited to, "there needs to be one or more..." or "one or more element is required."

Unless otherwise defined, all terms and especially any technical and/or scientific terms, used herein may be taken to have the same meaning as commonly understood by a person ordinarily skilled in the art.

Reference is made herein to some "embodiments." It should be understood that an embodiment is an example of a possible implementation of any features and/or elements presented in the attached claims.

Use of the phrases and/or terms including, but not limited to, "a first embodiment," "a further embodiment," "an alternate embodiment," "one embodiment," "an embodiment," "multiple embodiments," "some embodiments," "other embodiments," "further embodiment", "furthermore embodiment", "additional embodiment" or other variants thereof do not necessarily refer to the same embodiments. Unless otherwise specified, one or more particular features and/or elements described in connection with one or more embodiments may be found in one embodiment, or may be found in more than one embodiment, or may be found in all embodiments, or may be found in no embodiments. Although one or more features and/or elements may be described herein in the context of only a single embodiment, or in the context of more than one embodiment, or in the context of all embodiments, the features and/or elements may instead be provided separately or in any appropriate combination or not at all. Conversely, any features and/or elements described in the context of separate embodiments may alternatively be realized as existing together in the context of a single embodiment.

The present invention relates to system and method for reverse/forward auctioning in petroleum products trading. An import/export tender related to petroleum products is issued to international suppliers/buyers through an electronic portal. A premium/discount per unit over the marker (base quotes) is sought from the suppliers/buyers. Once the bids are opened, a plurality of bids (e.g., top three bids - as configured) are automatically identified by the system on the basis of a net delivered price per unit or weighted average net delivered price per unit, considering multiple factors such as, but not limited to, credit period provided, freight, base quotes, taxes (e.g., Goods and Services Tax (GST)), and invited for auction. In one embodiment, the configuration of number of eligible bids for auction may be dynamic and may be modified as per requirement. In case the total number of bids received is less than the number of configured bids (cut-off), then all such received bids may be considered for auction. The system shows a 'Minimum Bid Improvement' value per unit to eligible bidders without disclosing the actual best price which is the lowest (import) / highest (export) price, as applicable.

The present invention includes a number of advancements over conventional systems. As widely known, a bid increment in an auction is the difference between successive price requests. The bid increment, denoted by '$\delta$', is very small. In this case, the bidder with the highest value wins, and the price is no more than the second-highest value, but it is at least the second-highest value minus '$\delta$', because a lower price would induce the bidder with the second-highest value to submit a slightly higher bid. If the second-highest value is denoted with the somewhat obscure (but standard) notation 'v(2)', the final price 'p' satisfies 'v(2) $- \delta \leq$ p $\leq$ v(2)'.

In an embodiment, the present invention provides for a mechanism to determine and display a "minimum bid improvement" value per unit to eligible bidders associated with the identified bids, without disclosing the actual best price which is the lowest (import)/highest (export) price, as applicable.

Further, though top three bids (or any other pre-defined number of eligible bids) are identified, and the best bid is arrived at based on the net delivered price per unit or weighted average net delivered price per unit, the improvement sought from each bidder is in the "premium/discount" quoted by such bidder, such that after improvement, his/her bid becomes the best. This involves back-calculation by the system on a real-time basis of a differential amount, and based on the same, an instant forward-calculation of desired premium/discount involving various price elements/parameters such as, but not limited to, credit period provided, freight, base quotes, and tax. Arriving at the exact improvement factor for each offer to make it the best is highly tricky and complex due to involvement of multiple factors in calculation. Further, the e-tenders are sent by the system to all counterparties/users registered on e-tendering portal/system disclosed herein.

According to various embodiments of the present invention, the entire process of finalization and awarding of e-tenders after its opening including forward/reverse auctioning is complete within a short duration of three hours or lesser as against a duration of nine hours in case of export tenders and 33 hours in case of import tenders under the conventional systems. In fact, the system described herein is configurable in a manner such that the requirements for uploading/-downloading of documents for physical management approvals may be modified/customized on a need basis, thereby further expediting the complete tendering activity including auctioning in less than an hour. Since such a short duration is involved in finalization of e-tenders, the price quotes (premium/discount) received by a tender floating entity in its import/export e-tenders is very sharp, as the bids of counterparties are tied up in tender for such short duration, and thereby the risk element/ opportunity cost built in by them is extremely low as compared to larger duration e-tenders as per conventional systems. In contrast, the conventional methodologies involve waiting time for outcome of bid submissions till the time offers are finalized by the tenderers. However, under the subject system where auction activity normally starts within fifteen minutes (time duration is dynamic and can be customized) of tender opening, only the bidders eligible for auction receive the 'Auction Invitation' within 5 minutes of tender opening. Ineligible bidders are, thus, free to consider their offered cargo as free for participation in other trades within few minutes of tender opening. Also, for bidders eligible for auction, as soon as the auction activity is over in the system (within 30-40 minutes of bid opening), the best offer is identified through auction and thus the non-best offers post auction are free to offer the same cargo in other deals, irrespective of whether the complete validity period of offer has expired or not.

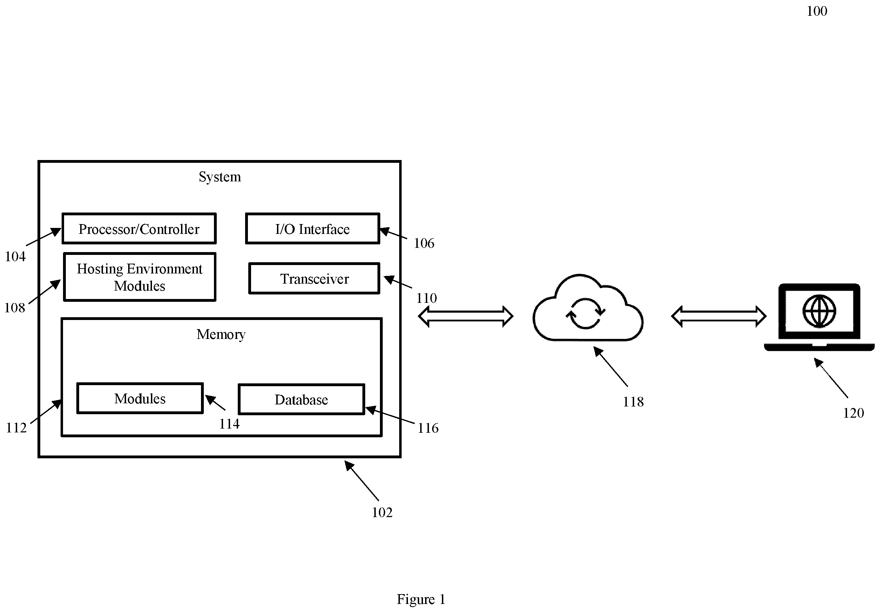

Figure 1 illustrates a schematic block diagram 100 of a system 102 for processing of bid offers, according to an embodiment of the present invention. The system 102 may be hosted on a server. The system 102 is an integrated platform which is configured to provide a mechanism for registering tenderers/users/bidders/parties (used interchangeably throughout the specification while referring to the users of the system 102) to be engaged in a tendering and/or auctioning process. Further, the system 102 is configured to facilitate access of the integrated platform via a web-interface of a user device 120, such as a mobile phone, laptop, tablet, desktop computer, etc. The access to the system 102 may be provided on the user device 120 may be provided via a communication network or a cloud-based network 118. The system 102 further facilitates creation of one or more import/export tenders via the user interface and also receives bid offers for the created tenders from the registered users on the platform. In one embodiment, the system 102 may include a processor/controller 104, an input/output (I/O) interface 106, hosting environment modules 108, a transceiver 110, and a memory 112. The memory 112 may further include modules 114 and a database 116.

In some embodiments, the memory 112 may be communicatively coupled to the at least one processor/controller 104. The memory 112 may be configured to store data, instructions executable by the at least one processor/controller 104. The memory 112 may include one or more modules 114 and a database 116 to store data. The one or more modules 114 may include a set of instructions that may be executed to cause the processing of bid offers based on a minimum improvement value, and to perform any one or more of the methods disclosed herein. The one or more modules 114 may be configured to perform the steps of the present disclosure using the data stored in the database 116, to perform processing of bid offers as discussed throughout this disclosure. In an embodiment, each of the one or more modules 114 may be a hardware unit which may be outside the memory 112. For the sake of brevity, the architecture and standard operations of memory 112, database 116, processor/controller 104, transceiver 110, and I/O interface 106 are not discussed in detail.

In one embodiment, the hosting environment modules 108 may include, but not limited to, web-browser module, email and SMS gateway, backup server module, application server module, and firewall.

In one embodiment, the system 102 may be protected, as the data/information may be maintained on a separate server. Moreover, as soon as bids are submitted by bidders, the bids are immediately encrypted and at the tender floating entity's end, it gets decrypted only after the different designated openers use their login IDs / passwords to access the system at/after tender opening time, along with digital signature certificates of each of the openers.

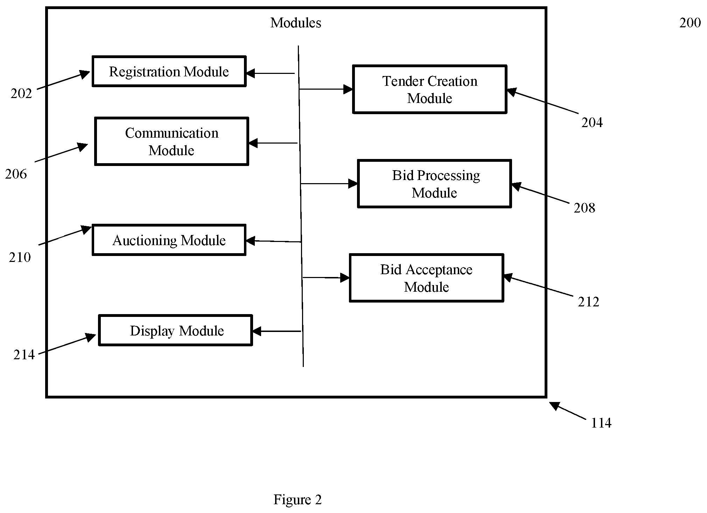

Figure 2 illustrates a schematic block diagram of modules 114 of the system for processing of bid offers, according to an embodiment of the present invention. In one embodiment, the modules 114 may include a registration module 202, a tender creation module 204, a communication module 206, a bid processing module 208, an auctioning module 210, a bid acceptance module 212, and a display module 214. The display module 214 may be configured to display information provided by the registration module 202, the tender creation module 204, the communication module 206, the bid processing module 208, the auctioning module 210, and the bid acceptance module 212 on a user/display interface of each user's device (e.g., 120 of Fig. 1).

In one embodiment, the registration module 202 may be configured to register a plurality of tenderers/users/-bidders/parties/entities for receiving bid offers associated with a tender. Further, the registration module 202 may be configured to register entities which may float one or more tenders via the system 102. In one embodiment, the registration module 202 may be configured to register a key-user as the single prime user authorized by the bidding entity's higher management. The key user may have authority and responsibility to create/manage any number of sub-users on the system 102. The roles are defined in the system/portal for different registered users based on requirement and the system access for each user is purely role based. The tender floating entity (e.g., XYZ firm) shall accept and activate (or reject, as the case may be) the online request of key-user or sub-users to participate in the bidding/auctioning. Further, once the plurality of users are registered, the registration module 202 may be configured to provide access to the system/portal using a respective user ID and a password. Additionally, the registration module 202 may be configured to facilitate bid submission for the tender(s) created on the system/portal.

In an embodiment, the key user and sub-users may be created for each different product available for auction. The eligibility of different users/counterparties to access/participate in e-tenders of a tender floating entity (e.g., XYZ firm) is restricted by the registration module 202 automatically (defined in the database) only to the product(s) for which such user/counterparty is registered. Specifically, each user, while registering on the system, may select one or more product types or product categories for participating in the tender/auction(s) of such related products, and the registration module 202 may be configured to restrict access to such products or product categories.

In one embodiment, the tender creation module 204 may be configured to create the tender based on one or more input parameters received from the plurality of users. The tender creation module 204 may provide for creation of indents by users of respective department(s) for tender creation/issuance. The various indenting parameters to be entered for creation of a tender, such as, but not limited to, product, product type, quantity, quality, loading/discharge period, loadport/discharge port, and loading hours (laytime). The tender creation module 204 may provide for various options for indent creation, such as, but not limited to, raising indents, recalling indents, put indent on hold, un-hold indent, request for indent return, and request for cancellation of raised indent. The tender admin(s) or tender floating entity (designated group) for the system shall then select the indent for tender creation and system shall automatically select the pre-defined terms and conditions template applicable to such product (defined in the database). Once all such indenting details are entered on the system/portal, the tender creation module 204 automatically considers these details for creation of tender for that product, and also proposes applicable tender terms and conditions, based on a pre-stored template in background for that product.

All the details such as loading period, name of loadport or the shipping co-ordinates (latitude/longitudes) in case of a ship-to-ship transfer (i.e., not from port), are selected by the bidder/user by selecting appropriate option from a drop-down list. Specifically, the details are input from an already uploaded list or entered in a particular format only. The shipping department of the bidder/user shall enter freight against each Free on Board (FOB) offer on the system/portal. However, in case suitable ship is not available for catering to the requirement, the shipping department shall enter 'NO' against vessel availability on the system itself. Such offer(s) shall be automatically excluded by the system for auction/finalization purposes.

Additionally, in one embodiment, the tender creation module 304 may be configured to create all tender related documents such as tender document, comparative statement, approval notes, award, etc. as per pre-defined templates which need minimum or no manual intervention.

In one embodiment, the communication module 206 may be configured to select one or more users, from the plurality of registered users on the system/portal, to invite bid offers for the created tender. In one embodiment, the users may be selected based on a category of a product associated with the tender. To select such users, the product category entered at the time of registration of the users is matched with the product category of the tender. Further, the communication module 206 may be configured to invite the bid offers from the plurality of registered users by sending emails/SMS or via automated calls.

Further, the communication module 206 may be configured to automatically send communications (emails, SMSs, etc.) to concerned users on completion/initiation of different events/activities. Further, a system mailbox is also available on portal/software itself in case there is delay in mail receipt on official mail ID of bidders/XYZ entity users. In one embodiment, the communication module 206 may be configured to send communications (e.g., emails) to the users/parties' communication addresses which were entered during tender creation process. In one embodiment, other details which may be considered for sending communications include, whether such tender shall also be sent to parties which need to submit bank guarantee for participation, referred to as "Parties under Bid Bond Category."

In one embodiment, the bid processing module 208 may be configured to receive a plurality of bid offers from the plurality of users for the tender. The bid offer may be received based on a number of inputs for each of a plurality of parameters provided via a user interface of the system accessible on a user device (e.g., device 120 of Fig. 1). In one specific embodiment, the bidders may be able to enter only their premium/discount value on the portal. Further, few conditions may have dropdown options for selecting values by the bidders, for example, all the negotiable terms already have multiple selectable options. However, there may be no or limited space on the system/portal to write detailed comments. All other terms and conditions may have been reviewed initially during registration or previous tender(s) by the tender floating entity, and all deviations acceptable to the entity may have been suitably incorporated in General Terms and Conditions (GTC) which is accepted by all bidders during the tender bidding process. Accordingly, the system of the present invention is configured to provide pre-configured options (e.g., as dropdown menu options) for entering values against one or more parameters for submission of a bid for a tender.

In one embodiment, the bid processing module 208 may be configured to facilitate resubmission/withdrawal of bid offers any number of times till a submission time window is open. The window submission time window may be entered during creation of the tender on the system. Multiple eligible (authorized by key-user) users of one counterparty can bid/rebid/withdraw their respective bid offers.

Further, the bid processing module 208 may be configured to verify a bid bond requirement (i.e., "Parties under Bid Bond Category") for the plurality of users before receiving one or more input parameters regarding bid offers from the users. Specifically, the bidders/users are maintained under bid bond category (i.e., "Parties under Bid Bond Category") within the system. Further, the amount of bid bond submitted by each such bidder is maintained in the system by the bid processing module 208. The bid processing module 208 follows a separate process of bid bond value/validity requirement calculation (for each tender) and for checking bid bond availability. Only after ensuring requisite bid bond, the bid processing module 208 allows the bidder to go for bid submission. The system or the bid processing module 208 ensures that there is no manual intervention by the tender floating entity. The system provides a provision to the bidders for checking anytime the bid bond value/validity that they have submitted with a specific tender floating entity.

In one specific embodiment, the bid processing module 208 may provide for an additional window to check whether they are eligible for bid submission against the tender or not, considering their bid bond in place with the tender floating firm. Soon after tender issuance, a window is available to such parties for calculating the requisite bid bond amount required which is then compared with their already submitted bid bond. Such bidders are allowed access to bid submission only if their calculated bid bond amount is sufficiently covered by their bid bond value. This facilitates valid participation in tenders.

Further, the bid processing module 208 may be configured to determine a net delivered price value based on the inputs received with the bid offer from the user. The net delivered price value may be determined based on the premium/discount submitted, credit period chosen by the bidder, etc., as these factors are likely to differ for different bids received. The determination/calculation of the net delivered price is also explained in the later sections. In one embodiment, the system 102 via the bid processing module 208 is configured to provide online calculation of bid bond value and validity to restrict or facilitate participation in e-tenders of various users registered on the system 102. Such calculation possibility is available from the time e-tender is issued and till the scheduled time for closure of the bid.

In one exemplary embodiment, the Net Delivered Price for each delivery option may be determined as:

Base quote applicable to the tender as per published reference reports + Premium/(Discount) offered by Bidder + Applicable Freight for the loadport (in case of FOB offers) +/- Additional adjustment for special freight applicable to particular ports + Adjustment for tax (e.g., GST) on freight if applicable - Credit period offered by the Bidder considering applicable voyage days from Load port to Discharge port.

Furthermore, the bid processing module 208 may be configured to open the submitted bid offers and identify at least two bid offers (e.g., three bid offers), from the plurality of bid offers, based on the net delivered price value corresponding to each of the plurality of bid offers. The bid processing module 208 may be configured to maintain confidentiality regarding details of name of parties, quotes of parties, ranking, etc. at the time of tender opening. Such details are available only once the price is accepted/rejected in the system by respective department/user of tender floating entity, to maintain confidentiality of offers received. As soon as the bid opening is complete, the bid processing module 208 may be configured to identify the top plurality of bids (e.g., three top bids). In one embodiment, the tied parties are also automatically dealt with by the system (all tied considered if in top three).

In case of import tenders, the system shall seek shipping details automatically from the respective shipping department of the user in case an FOB offer has been received. In cases where a tender seeks FOB offers, as soon as the bid submission time is over and tender is opened (in such case only technical opening without displaying price will take place), the system will send an email alert to the respective shipping department on FOB offers. Accordingly, the system 102 shall consider entry of shipping data (suitable guidance shall be displayed by system to shipping department on their input at each step).

In one embodiment, the auctioning module 210 may be configured to send an invite to at least two users associated with the at least two bid offers related to the tender for auction. Further, the auctioning module 210 may be configured to determine, for each of the at least two users, the minimum improvement value based on the bid offer of the corresponding user, a best bid offer among the at least two bid offers, and a predefined improvement factor, to be provided to each of the at least two users. The predefined improvement factor is indicative of a minimum change required in the bid offer to match the best bid offer in the auction. The minimum improvement value for a specific user is based on difference in the bid offer for that user with respect to the best bid among the at least two users/bids plus the minimum improvement factor which may be predefined (e.g., one cent or 10 cents). The minimum improvement value corresponds to a minimum value by which the user/bidder should increase his/her bid to become the best bid among the at least two users. The minimum improvement required and the applicable improvement factor is automatically determined by the system in real-time and the requisite minimum improvement amount is displayed to the bidder via the user interface of user device instantly. The party/user sees only the minimum factor (one cent/10 cents, as the case may be).

In case of an import order with FOB offer, after expiry of specified duration and in all other cases, soon after tender opening activity completion, the auctioning module 210 may be configured to invite the top three bids for Forward/Reverse Auction which shall start at a specified time, as mentioned in the tender's terms and conditions.

The auctioning module 210 may be configured to send the invite to the at least two users automatically without any manual interference, and any information about any of the at least two users/parties are not revealed to each other by the system. The auction starts at a designated time and runs for a predefined time period (e.g., 10 minutes).

Furthermore, the auctioning module 210 may be configured to receive, from a user of the at least two users, a revised bid offer based on the minimum improvement value. No improvement lower than minimum improvement is allowed. Any improvement made by either of the eligible parties shall trigger a change in minimum improvement requirements for other parties and the process continues. Further, the auctioning module 210 may be configured to receive the revised bid offer within a predefined time period for auction. The predefined time period may be extended for auction to receive the other revised bid offer when the revised bid offer is received during a specified duration of the predefined time period. Additionally, the auctioning module 210 may be configured to determine, for each of the at least two users, a revised minimum improvement value based on the revised bid offer received from the user to receive another revised bid offer from the at least two users.

For instance, if the auction is running for a predefined time period of 10 minutes, and if a revised bid offer is received during last one minute of the predefined time period of 10 minutes, then the system increments the predefined time period by another predefined time period (e.g., 15 minutes). This another predefined time period may be variable. However, in the variable level, the participants have to ensure doing improvements such that there is no duration of continuous 'x' minutes (e.g., 3 minutes) during which no improvement is made, else the auction may end. The system automatically guides the users/bidders about the minimum improvement required by them (the system does not accept below this amount) to become the best for a product/cargo ID. Bidders can make any number of improvements as the "minimum improvement" value required keeps changing on real-time basis for each bidder, till the auction continues.

Further, though top three bids (or any other pre-defined number of eligible bids) are identified, and the best bid is arrived at based on the net delivered price per unit or weighted average net delivered price per unit, the improvement sought from each bidder is in the "premium/discount" quoted by such bidder, such that after improvement, his/her bid becomes the best. This involves back-calculation by the system on a real-time basis of a differential amount, and based on the same, an instant forward-calculation of desired premium/discount involving various price elements/parameters such as, but not limited to, credit period provided, freight, base quotes, and tax. Arriving at the exact improvement factor for each offer to make it the best is highly tricky and complex due to involvement of multiple factors in calculation. Further, the e-tenders are sent by the system to all counterparties/users registered on e-tendering portal/system disclosed herein.

An import tender of an XYZ entity may allow cost and freight (CFR) (Shipping by party) and FOB (Shipping by XYZ entity) submissions. Exports by XYZ entity are only on FOB basis. There is a unique feature that in import tenders that system considers both FOB and CFR bids for assessing top 3 eligible bids. Here bidders are allowed to submit both FOB and CFR bids, such that in case both these bids come in top plurality of bids (e.g., top 3 bids), a bidder may carry out improvement in either or both of its offers, as system considers them 2 different bids. Multiple factors are considered by the system automatically for arriving at minimum improvement required for each bidder for each cargo ID/product.

In one embodiment, the bid acceptance module 212 may be configured to determine an acceptance bid offer from one of the at least two users based on the revised bid offer and the other revised bid offer (may be multiple revised bid offers based on bid offers provided by bidders during auction time). After the auction completion, the final price arrived is automatically informed by the system through email to the tender creation module 204, and the tender floating entity is required to submit decision of acceptance/rejection of price for each cargo ID on the portal. In one embodiment, the post auction price shall become available to price accepting department designated users for acceptance/rejection of bid offers in the system. This department does not come to know of any other party related details. Once the price is accepted or rejected on the portal, the system shall open to tender admins wherein all details about bids received/parties can be viewed.

Based on the price acceptance/rejection decision, the bid acceptance module 212 shall automatically prepare (based on information available in the database) and propose a tender finalization note (when at least one cargo is getting finalized) or a cancellation note (all cargoes price rejected). After management's approval for proposal finalization is received, it is submitted in system and the system would generate/propose the award document for the best party in each cargo. Such award would be issued to party after signature, through portal.

In operation, the export e-tenders are finalized in 3 to 4 hours after opening and import tenders in 4 to 7 hours after opening. This facilitates in sharp quotes as bidders have to hold cargo for a short time they being best or not only by the end of full validity period (bidders generally leave cargo in case they are not invited for auction). This reduces their holding risk to large extent. The conventional methodology involves waiting time for outcome of bid submission till the time offers are finalized the by tenderers. However, under the subject system where auction activity normally starts within fifteen minutes (time duration is dynamic and can be customized) of tender opening, only the bidders eligible for auction receive the 'Auction Invitation' within a predefined time (e.g., 5 minutes) of tender opening. Ineligible bidders are thus free to consider their offered cargo as free for participation in other trades within few minutes of tender opening. Also, for bidders eligible for auction, as soon as the auction activity is over in the system (within 30-40 minutes of bid opening), the best offer is identified through auction, and thus non-best offers post auction are free to offer the same cargo in other deals, irrespective of whether the complete validity period of offer has expired or not.

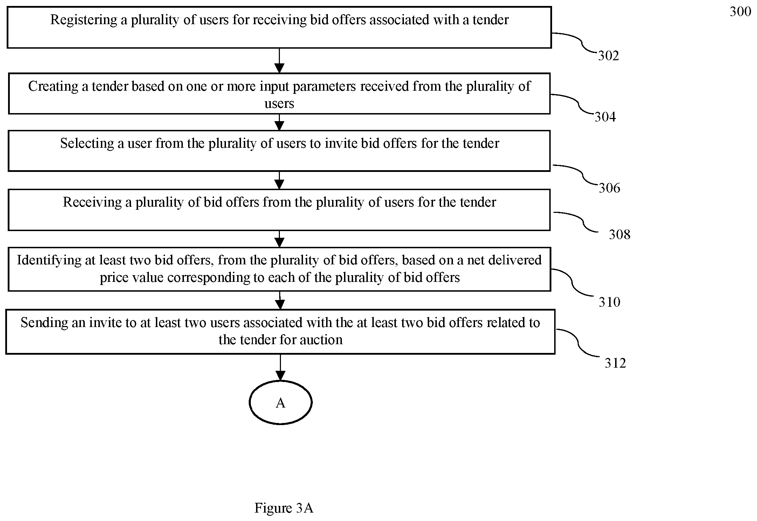

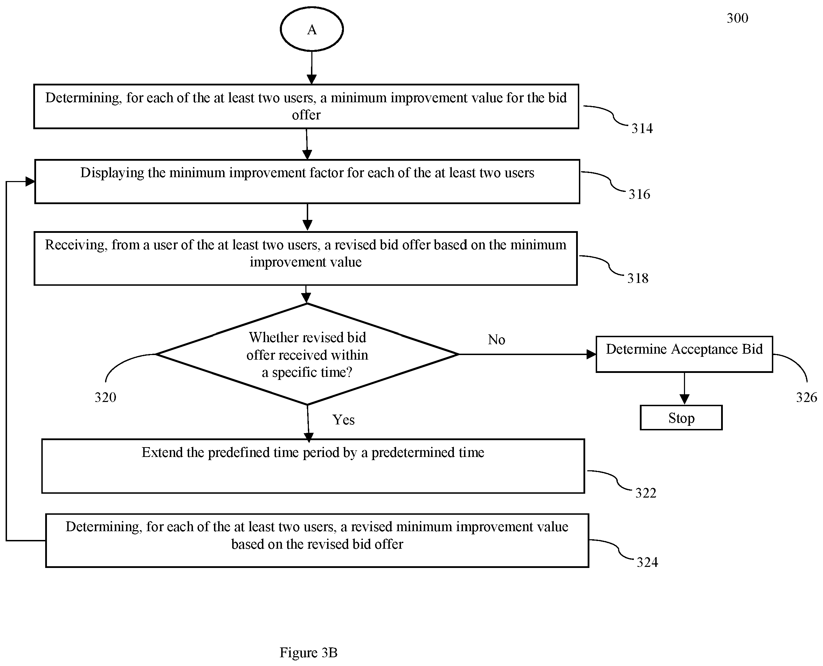

Figures 3A and 3B illustrate an exemplary process flow depicting a method 300 for processing of bid offers based on a minimum improvement value, according to an embodiment of the present invention.

At step 302, the method 300 may include registering a plurality of tenderers/users/bidders/parties/entities for receiving bid offers associated with a tender. The step 302 may be performed by the registration module of the system, as discussed previously. It may be apparent to a person skilled in the art that the step 302 encompasses steps/features related to registration as discussed previously in conjunction with Fig. 2. For the sake of brevity, these are not discussed in detail again here.

At step 304, the method 300 may include creating the tender based on one or more input parameters received from the plurality of users. The step 304 may be performed by the tender creation module of the system as discussed previously. It may be apparent to a person skilled in the art that the step 304 encompasses steps/features related to tender creation as discussed previously in conjunction with Fig. 2. For the sake of brevity, these are not discussed in detail again here.

At step 306, the method 300 may include selecting a user from the plurality of users to invite bid offers for the tender. The step 306 may be performed by the communication module of the system as discussed previously. It may be apparent to a person skilled in the art that the step 306 encompasses steps/features related to communication module as discussed previously in conjunction with Fig. 2. For the sake of brevity, these are not discussed in detail again here.

At step 308, the method 300 may include receiving a plurality of bid offers from the plurality of users for the tender. The step 308 may be performed by the bid processing module of the system as discussed previously.

At step 310, the method 300 may include identifying at least two bid offers, from the plurality of bid offers, based on a net delivered price value corresponding to each of the plurality of bid offers. The step 310 may be performed by the bid processing module of the system as discussed previously. The steps 308-310 may be performed by the bid processing module of the system as discussed previously. It may be apparent to a person skilled in the art that the steps 308-310 encompass steps/features related to bid processing module as discussed previously in conjunction with Fig. 2. For the sake of brevity, these are not discussed in detail again here.

At step 312, the method 300 may include sending an invite to at least two users associated with the at least two bid offers related to the tender for auction. The step 312 may be performed by the auctioning module of the system as discussed previously.

At step 314, the method 300 may include determining, for each of the at least two users, the minimum improvement value based on the bid offer of the corresponding user, a best bid offer among the at least two bid offers, and a predefined improvement factor. The predefined improvement factor is indicative of a minimum change required in the bid offer to match the best bid offer in the auction. The step 314 may be performed by the auctioning module of the system as discussed previously.

At step 316, the method 300 may include displaying the minimum improvement factor for each of the at least two users. The step 316 may be performed by the display module of the system as discussed previously. It may be apparent to a person skilled in the art that the step 316 encompasses steps/features related to display module as discussed previously in conjunction with Fig. 2. For the sake of brevity, these are not discussed in detail again here.

At step 318, the method 300 may include receiving, from a user of the at least two users, a revised bid offer based on the minimum improvement value. The step 318 may be performed by the auctioning module of the system as discussed previously.

At step 320, the method 300 may include determining whether the revised bid offer is received within a specific time period within the predefined time-period. The step 320 may be performed by the auctioning module of the system as discussed previously.

At step 322, the method 300 may include extending the predefined time period by a predetermined time based on a determination that the revised bid offer is received within a specific time period within the predefined time-period. The step 322 may be performed by the auctioning module of the system as discussed previously.

At step 324, the method 300 may include determining, for each of the at least two users, a revised minimum improvement value based on the revised bid offer. The process will then move to step 316 and similar process may be repeated. The steps 312, 314, and 318-324 may be performed by the auctioning module of the system as discussed previously. It may be apparent to a person skilled in the art that the steps 312, 314, and 318-324 encompass steps/features related to auctioning module as discussed previously in conjunction with Fig. 2. For the sake of brevity, these are not discussed in detail again here.

At step 326, the method 300 may include determining acceptance bid based on a determination that the revised bid offer is not received within a specific time period within the predefined time-period. In one embodiment, the determination of acceptance bid may be further based on a determination that the predefined time-period is over. The step 326 may be performed by the bid acceptance module of the system as discussed previously. It may be apparent to a person skilled in the art that the step 326 encompasses steps/features related to bid acceptance module as discussed previously in conjunction with Fig. 2. For the sake of brevity, these are not discussed in detail again here.

The e-auction discussed previously with respect to Fig. 2 and Fig. 3 may include forward auction or reverse auction. The various options to implement forward and/or reverse auctions may be provided via the display interface of user device of the tenderer/bidders etc. The two methodologies may be implemented in accordance with various embodiments of the present invention are discussed hereinbelow.

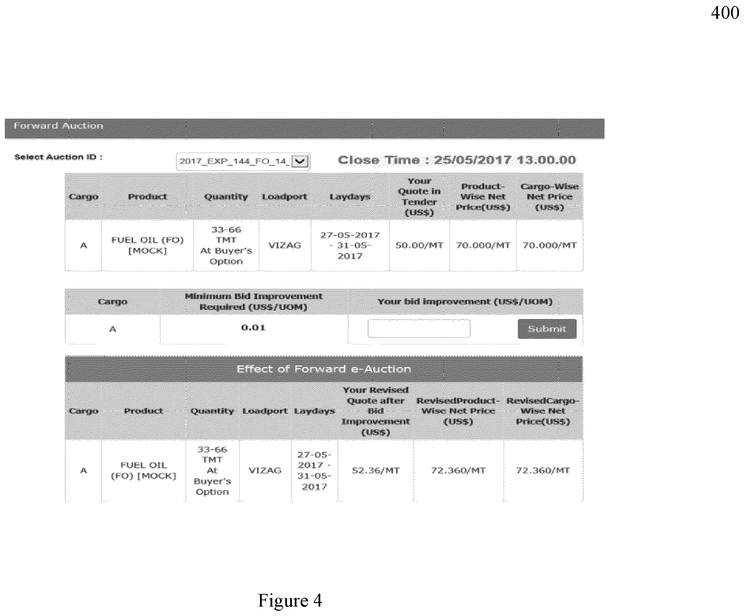

Figure 4 illustrates an image 400 depicting an interface of a forward auction, in accordance with an embodiment of the present invention.

Forward Auction

• The system is designed to facilitate "e-Auction" (forward auction in case of product export) process to get the best possible rates from the market by fostering more competition.

• After completion of tender opening in the system and clicking of "Freeze" button in the bid opening menu, the system shall ask for confirmation from the tenderer whether to proceed with "Forward Auction (FA)" creation.

• If "No" option is clicked, no forward auction will take place and the initial price itself shall flow to price acceptors.

• If "Yes" option is selected then "FA" would be created and conducted by the system, which shall be amongst:

• Highest bidders/users parties (e.g., H1, H2, and H3) in case bidders participation is greater than a predefined number of bidders (e.g., 3); or

• All the qualified bidders in case bidders participation is lesser than or equal to the predefined number of bidders (e.g., 3).

  ◦ In case of a tie at H1/H2/H3 positions, all tied parties shall be considered for forward auction at each such level.

• Any approved sub-user(s) along with counterparty key-user would be able to participate in the forward auction simultaneously.

• "Forward auction" window shall start exactly after a predefined time (e.g., 15 minutes, as may be specified before tender approval) of bid opening date and time, as specified in the tender conditions. The time gap of 15 minutes is configurable in the metadata stored in the database (e.g., database 116)- for management of bid offers in the system and can be enhanced/reduced by an admin user (e.g., a user of the tenderer entity).

• On creation of forward auction, necessary system generated email (forward auction intimation email) shall be sent to eligible top three (predefined number) bidders (authorized key-users/sub-users) automatically by the system (without any copy to XYZ entity users), as soon as the tender is opened, specifying their eligibility for forward auction and timings of forward auction window.

• The auction rules are configurable and applicable for all the auctions created after configuration of the rules.

• In the configuration, a total number of rounds, e.g., 1, 2, 3, 4 or 5 may be decided and pre-configured in the database of the system. The user may select the number of round(s) from the drop down and equal no. of rows will be generated.

• In an exemplary embodiment, for the below configuration, the "forward auction" may be implemented as per below methodology in Table 1:

Table 1

| Round | Tenure (In Mins.) | Auto Extension (In Secs.) |
|---|---|---|
| 1 | 10 | 60 |
| 2 | 5 | 60 |
| 3 | 5 | |

a. Number of rounds selected - Three.

Round - I: First 10 minutes.

Round - II: Next 5 minutes.

Round - III: Next 5 minutes.

b. For all the stages, the minimum improvement factor will be US 1 cent (One Cent) per MT or BBL as the case may be (depending on Unit of Measurement of pricing formula).

c. In case any improvement in the highest net price per MT is received in the last 60 seconds of the Stage - I or Stage - II, the e-Auction window will automatically move to next stage, i.e., to Stage - II or Stage - III respectively.

d. Similarly, if no improvement is received in the last 60 seconds of the Stage - I or Stage - II, the e-Auction activity would end, and no further e-Auction stages would be activated by the system.

e. In any case, no further e-auction windows will be allowed after the Stage - III.

f. The system under no circumstances shall accept any improvement by bidders below the minimum improvement value/amount indicated by the system.

g. The above methodology shall be applicable for all considered together in a particular tender. In other words, if there are two cargoes in a tender, such as cargo A and cargo B, and even if improvement during FA is made only in one cargo (say cargo A), still in case the FA moves to Round II, such improvement shall be applicable to both the cargoes under the tender irrespective of the fact that no improvement took place in other cargo (i.e., cargo B here).

• To improve net price per MT or BBL based on quoted premium/discounts, the following information shall be visible to qualified bidders at the time of forward auction:

◦ Minimum Bid Improvement Required

◦ Revised Quote after Bid Improvement

• System behaviour in case of forward auction would be as below for different cases:

a. In case of multiple cargoes in a tender, FA for each cargo shall have to be done separately though it shall be available simultaneously.

b. In case of a product with dock-line quantity, improvement under FA shall be allowed by the system only for the product quote (premium/discount). The dock-line quote shall remain unchanged. It is a system requirement to enable happening of FA in the system as auction with multiple price linkage under same cargo is not practical.

c. In case of combined cargo (Cargo C = Cargo A + Cargo B), an improvement from a bidder for combined cargo would be sought by the system by comparing the same with combined cargoes only. The decision as to whether combined cargo (here Cargo C) improvement would make its revised quote even better than individually combined quote for Cargo A + Cargo B, would come at a later stage (price acceptance).

• While performing "Forward Auction", the below shall be considered:

a. Item(s) for Forward Auction - Cargo-wise net price as evaluated shall form the basis of comparison for finalizing minimum improvement required by the system.

b. Start price for individual item - Cargo-wise "H1" as determined after tendering opening.

• Even if system email / mail in the inbox inviting for forward auction is somehow not received in time at bidders' end, a bidder may always visit the "Forward/Reverse Auction" menu (anytime after about 7-10 minutes from tender opening time or before start of auction) on the portal and click on the sub-menu "Forward Auction (Export)," where the tender Id would be available in dropdown, in case such bidder has been shortlisted for invitation in FA.
• Bidders can improve their bids against each cargo (for which they are invited), but one cargo ID improvement at a time. In other words, inputting improvement differential for all (eligible) cargoes simultaneously may not be allowed by the system.
• When an improvement against a cargo is entered by the bidder and "Submit" button against the same is clicked, the system shall immediately enquire from the bidder, by converting the improvement differential in words viz. "Do you want to improve your offer by USD ..... and CENTS ......ONLY? Please Confirm." On clicking "OK" the system shall within few seconds (about 2-4 seconds) either accept such improvement or advise that improvement is insufficient and bidder should improve further (as the improvement shall at the time of submission would have been lesser than "Minimum Bid Improvement" value required, as indicated in such menu.
• Further, general instructions on FA are available in the "General Instructions on Forward Auction" document under "Guide" menu to Bidders and "Help" menu with XYZ entity users.

• Forward Auction Status menu:

This menu enlists the on-going (created/not yet ended) Forward Auction tender Ids. On selecting a tender Id, the system would advise the FA start time, current end time (depending on the no. of auction rounds completed) and the overall FA end time.

The purpose of this menu is to display whether FA is created / going-on and if in progress, the level of FA.

• In one embodiment, under the menu "MIS Reports (Export)" a sub-menu "Forward e-Auction Bid History" may be available which provides a dropdown list of Tender IDs. On selection of a tender ID, the system shall display cargo-Id wise history/list of improvements made in the system indicating the name of counterparty making improvement, the name and email id of improver and the time (in IST up to 5th decimal of seconds) in seriatim of time of improvement. This shall also be annexure to the final approval note.

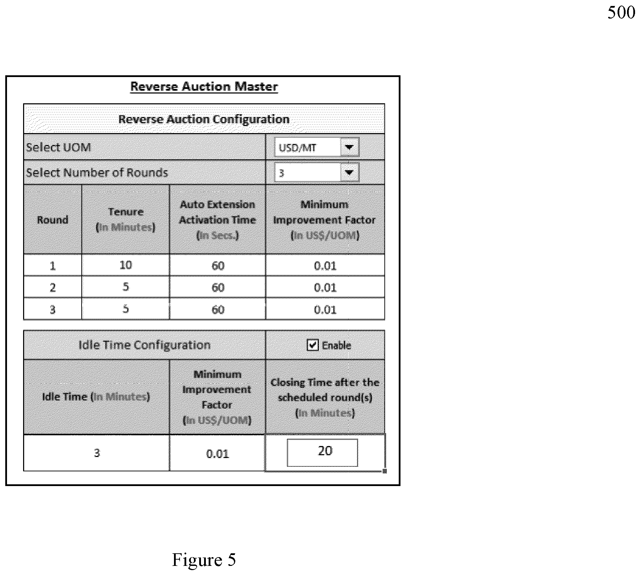

Figure 5 illustrates an image 500 depicting an interface of a reverse auction (RA), in accordance with an embodiment of the present invention.

Reverse Auction

• In an exemplary embodiment, the improvement factor has been presently defined as US 1 cent (One Cent) per BBL and US 10 Cents (Ten Cents) per MT. This is configurable in the system.

• In case any improvement in the Lowest Net Price per UOM is received in the last 60 seconds of the Stage - I or Stage - II, the Auction window will automatically move to next stage, i.e., to Stage - II or Stage - III respectively, as already discussed previously with respect to FA.

• Similarly, if no improvement is received in the last 60 seconds of the Stage - I or Stage - II, the Auction activity would end, and no further auction stages would be activated by the system.

• In case idle time basis is not enabled, no further auction windows will be allowed after the Stage - III.

• If variable round is enabled, then after fixed level(s), RA shall happen till an inactivity period of specified duration (presently defined as 3 minutes) is encountered. This inactivity period is also configurable in the system.

• This has been explained using an example below:
Example of two possible scenarios with the above configuration of RA is as below (considering RA start time as 11:00 Hrs. IST and closing time selected as 20 minutes).

    ◦ RA shall start at 11:00 and 1st round shall run till 11:10 (fixed round 1);

    ◦ Only if there is any improvement during 11:09:00 - 11:09:59, RA shall auto-extend to Fixed Round 2 till 11:15.

    ◦ Similarly, only if there is any improvement during 11:14:00 - 11:14:59, RA shall auto-extend to fixed round 3 till 11:20.

    ◦ If variable level/Round is not enabled: RA shall end after Fixed Round 3, even if the improvement continues till the last second and the implication of value "60" has no impact on RA process.

    ◦ If Variable Level/Round is enabled: After all the three fixed rounds and if there is any improvement during 11:19:00 - 11:19:59, then RA shall continue from 11:20 onwards for a specified variable round duration (e.g., 10 or 15 or 20 minutes as defined in the database). In an embodiment, a rider may be included that if this variable round encounters an inactivity period of a predefined duration (e.g., 3 minutes, as configurable in the system), the auction will end there, irrespective of overall duration of variable round. Thus, here the RA shall terminate if either the system finds an inactivity time or the variable round closing time is reached.

**Reverse Auction & Eligibility**:

a. Eligibility of key-users / sub-users of a counterparty to participate in the Reverse Auction shall be in line with the eligibility defined for participation in tender/ submit offers by Bidders' key-user.

b. "Net Price" shall be compared to arrive at the L-1, L-2, L-3, L-4, ... prices and bidders corresponding to those prices. (Note - there may be multiple bidders on the same positions of L-1 (Best offer), L-2 (Second best), L-3 (Third Best), L-4 (Fourth best) and so on).

c. In an exemplary embodiment, in a tender, for one cargo ID, multiple bidders may participate with multiple different delivery options. For example, for one cargo ID, 5 bidders may participate with 5 delivery options each. Then total number of offers for that Cargo ID = 5X5 = 25. The 25 NP prices shall be calculated as LY1, LY2, .... LY25.

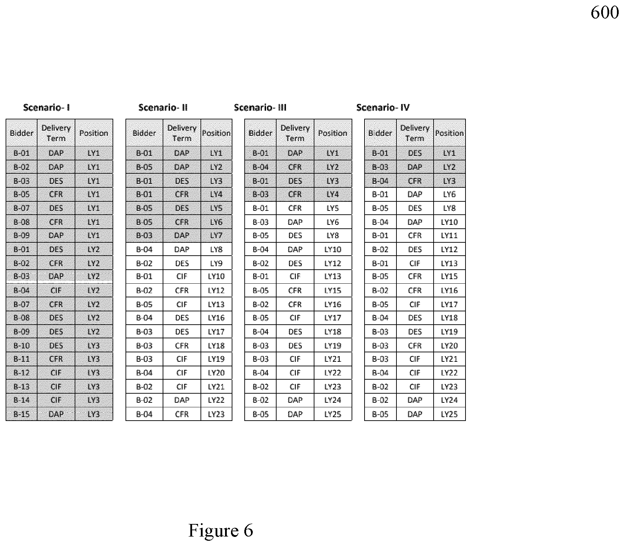

Figure 6 illustrates an image 600 depicting scenarios 1 through IV for a number of offers, in accordance with an embodiment of the present invention. Cells highlighted represent the offers which shall be considered for auction. In case where participation in tender is more than 3 (three), then all bids until at least three bidders with at least three best unique loaded prices are achieved shall be considered for auction. For this, the system has to scrutinize all offers till LY3 and continue from LY4 onwards only till it gets an offer by third bidder (as shown in above scenarios).

In scenario-I, a case has been considered where 15 bidders have participated and there is tie at LY1, LY2 and LY3 positions such that all 15 Bidders who have participated in the tender are under top 3 positions. In such a case all the 15 bidders and their offers shall be eligible for auction.

In scenario-II, 3 offers each of 1st Bidder (B-01) and 5th Bidder (B-05) are better than the best offer of 3rd Bidder (B-03) which is at the 7th position. So all the 6 offers of B-01 and B-05 + 1 offer of B-03 shall be eligible for auction. This means that although B-01, B-05 and B-03 had offered 4 offers each, but B-01 and B-05 will be able to view 3 offers selected for auction, on their auction windows, while the B-03 will see only one offer in its auction window.

Similarly in scenario-III, 2 offers of B-01, 1 offer of B-04 and 1 offer of B-03 shall be eligible for auction. In Scenario -IV, 1 offer each of B-01, B-03 and B-04 shall be eligible for auction, i.e., all the three will see only one offer in their auction window. In all cases, the 3rd Bidder selected for auction will have only 1 offer in its auction window if its offers are not in tie.

In case participation is less than three bidders, all offers of all bidders shall be eligible for auction. Eligible bidders shall be intimated to participate in auction through an automatic system generated email (similar to Export portal). System will facilitate "Reverse Auction" process to get the best possible rates from the market by fostering more competition. Any approved sub-user(s) along with counterparty key-user within the company can participate in the RA simultaneously. RA window shall start after 15 minutes (or such time as may be specified before tender publishing) of opening of the bids in case of cost, insurance, and freight (CIF) or only cost and freight (CFR) tenders. However, wherever FOB offers are also acceptable in a tender, RA shall start only after 4 hours and 15 minutes (presently 4 hours are allowed to shipping for shipping data entry). This time period of 4 hours and 15 minutes is configurable by the operators (e.g., tenderers) of the system. On the display providing auction details, the RA close time shall be visible to counterparties.

The running status shall also to be available for the users having "Tender Admin" role under the "Reverse Auction Status" menu. To improve Net Price (NP) per UOM based on premium/discounts quoted by them, the following information shall be visible to qualified bidders at the time of Auction:

• Offered Price

• Minimum Bid Improvement Required

• Revised Price after Bid Improvement

Also, while making an improvement against a Cargo ID, the system shall calculate and indicate the Revised Quote (Premium/Discount) post proposed improvement through a RECONFIRMATION WINDOW. Only after the Bidder checks such revised quote and TICKS the SUBMIT button (enabled only after clicking the TICK) would the system allow submission of such improvement.

Any improvement less than the value of Minimum Improvement Required displayed by the system shall not be accepted. In the "RA" screen, clicking on the "Cargo ID" option would open up all the other relevant details about the Cargo ID. The timelines for RA shall be as given in the tender document. In case NO Reverse Auction is created, the system shall straight away move to next step of Price Acceptance/Rejection or next step as per process.

Reverse auction process:

i. In an exemplary embodiment, the bidders eligible for auction will get an intimation on mail stating "Reverse Auction for Cargo ID / for tender ID.... shall be done at .... Hrs. You are requested to participate. In case of non-participation, submitted Bid shall be considered final".

ii. The bidder shall be able to see on screen the offered price, improvement needed and final bid after improvement, for each cargo in which he/she is eligible.

iii. In case of a single bid, reverse auction shall be allowed with min allowed discount of one cent per BBL or ten cents per MT.

The basis for determining improvement in Reverse Auction shall be as mentioned herein below. The minimum improvement may be shown as 0.01 or 0.10 per Unit, as the case may be, for NP1 counterparty(s).

I. For NP2, the value 'NP2-NP1+0.01' or 'NP2-NP1+0.10' shall be calculated by system in backend. To derive that value, how much improvement is required in "Quote" (Premium / Discount) shall be displayed in auction floor as "Minimum Bid Improvement Required" (i.e., the minimum bid improvement value), wherein 0.01 or 0.10 is the predefined improvement factor.

II. Similarly, the system shall process for NP3.

III. Auction floor also shall show the offer in Tender as well as the offer after improvement, if any.

IV. After auction, bidder with lowest offer (L1) shall be determined where minimum improvement is (say) 0.01 per Unit. e.g.:

L-1 and L-2 quotes are: 7.20 and 7.35

The net price (NP) may be determined as 7.227 and 7.363.

For L-2 to win the tender, it needs to have an improvement in loaded price by (7.363 -7.227) + 0.01 = 0.146.

For this improvement in loaded price, the corresponding improvement required in the offered price shall be derived by the system in two decimal places and same shall be shown on the auction screen of bidder as "improvement needed" (as in export cases).

Similar process shall be done for L-3.

For L-1, minimum required shall be a correction of 0.01 in loaded price.

An exemplary process for e-auction in accordance with various embodiments of the present invention is discussed herein below:

Let's consider there are 5 bidding entities viz. A, B, C, D, and E respectively. An exemplary tender may be floated for LPG import.

**Registration of Bidders/sending tenders**

The tender is sent to all the bidding entities (i.e., key-user and sub-users authorized by key-user of each entity on the system/portal) registered for that product in the system. Thus, the key-user may authorize various sub-users under each product, such as LPG, Petrol, Diesel and Kerosene by just clicking a tick box.

The system is configured to automatically select the bidders in background to whom tender is to be sent once a product category is/are ticked during tender creation. Thus, the system may allow additional selection of bidders of even petrol, diesel, and kerosene, if so desired, for sending tender for LPG.

In an embodiment, the bidding entities may be maintained by the system under different categories (such as National Oil Companies, Oil majors, Normal traders, and Traders under Bid Bond Category). In case of traders under Bid Bond category, the calculation of requisite amount and validity of the Bid Bond (i.e. Bank Guarantee) as per policy shall be automatically checked by the system before allowing a bidder to proceed with the bid submission. In case of inadequacy of value/validity, the system may not allow access to the bidding floor.

Further, the authorized key-user/sub-users may receive a system email intimation with tabulated summarized tender details indicating that the tender has been issued and can be accessed/participated on portal, as per timings mentioned in the e-tender.

Within the scheduled date and time mentioned in tender, bidders (key-user/sub-user) may submit/resubmit their bids any number of times against each/any/all Cargo ID(s) in a tender. In case of resubmission, only last submitted bid shall be considered.

**Tender creation/issuance**

Now product LPG has two sub-products, such as Propane and Butane. The base quotes (i.e., the base price) of both these sub-products are different. However, single premium/discount (combined) is sought from Bidders against main product LPG.

Suppose an import tender for Product LPG is issued with details as below IN Table 2:

Table 2

| Cargo ID | Product | Quantity | Discharge Port(s) | Laytime (Hours) | Period of delivery ** | Delivery Options |
|---|---|---|---|---|---|---|
| 1 | LPG-Propane | 15000-20000 MT | 1st Port: Vizag 2 nd Port: Haldia | 72 Hours* | 15.03.2021 to 18.03.2021 | FOB# and/or CFR@ |
| | LPG-Butane | 12000-14000 MT | 1 st Port: Vizag 2 nd Port: Haldia | 72 Hours* | 15.03.2021 to 18.03.2021 | FOB# and/or CFR@ |
| *Product discharge time<br>**During this period Ship should arrive<br>#Ship arranged by XYZ FIRM<br>@Ship arranged by bidder<br>Note: Maximum quantity is considered for evaluation/all calculation purposes. | | | | | | |

**Calculation of requisite value/validity of Bid Bond**

The Bid Bond value is calculated by the system basis the quotes entered by tendering department at the time of tender issuance. To these base quotes (which shall be visible to such bidder after portal login), Bid Bond category bidder adds/reduces its proposed Premium/Discount to arrive at required Bid Bond amount (i.e., requirement may be 5% of value of bid) which shall be compared with available Bid Bond value submitted with XYZ FIRM (i.e., the tenderer). Similarly, the system may check the validity of such Bid Bond which needs to be a specific number of months (e.g., 4 months) from date of tender opening.

So, if base quote of LPG-Propane is say, 400/MT and LPG-Butane is 500/MT, then the system may seek the single Premium/Discount from such Bidder to be added/reduced from respective sub-product and arrive at the Bid Bond value by multiplying with respective quantities as per tender (converted to currency of tender).

**Bidding Floor/Bid submission**

On Bidding floor (for eligible bidders), there shall be tender details available for bidders' reference. Also, there shall be slot available for entering Discount/Premium amount against each Cargo ID. Bidder shall also be able to select few other terms and conditions (e.g., Governing law and arbitration) through dropdown list.

Suppose the following are Bids submitted by the 5 parties in Table 3:

Table 3

| Party Name | CFR Option | FOB Option* |
|---|---|---|
| A | Premium 2.05/MT | Discount 0.50/MT |
| B | Premium 2.99/MT | - |
| C | Premium 3.11/MT | Discount 1.50/MT |

(continued)

| Party Name | CFR Option | FOB Option* |
|---|---|---|
| D | Premium 2.99/MT | - |
| E | - | Discount 1.10/MT |
| *Freight may be added by XYZ FIRM to make it comparable with CFR bids. | | |

**Entering the Input values**

Before the tender is visible for opening (even after its scheduled opening date and time), the system may require entry of input values such as base quotes of LPG Propane and LPG Butane for evaluation/comparative statement of offers, the applicable interest rate % for calculating credit period benefit for each Bid, the exchange rate (INR Vs USD) used for currency conversion, etc.

**Tender Opening**

In an embodiment, at a designated tender opening time, the system may make the tender visible in dropdown and allow decryption of Bids by a team of 3 openers from three different disciplines (as per list maintained in master). Tender openers list maintained in master cannot be modified for a tender after tender issuance.

**Shipping data in case of FOB offers**

Fob offers require shipping to be arranged by XYZ FIRM. Considering the bids submitted by the parties, the system shall assess requirement of freight for FOB offers received and send the details collected from bidders on Loadport/shipping coordinates, loading period, etc. and seek applicable freight and estimated voyage days in the system, from shipping department users of XYZ FIRM, within a specified time. There are two different types of shipping departments in XYZ FIRM - one for time charter ships and other for voyage charter ships. Both these departments may enter data for FOB offers received against a tender. However, in case the time charter shipping department enters ship availability data, the system shall ignore data entered by voyage charter shipping department, as per rules.

Also, in case no input is entered within stipulated time duration by both the shipping departments, it is considered that no ships are available and such FOB offer(s) are rejected and not evaluated by the system automatically.

Suppose the shipping department assesses the following freight in respect of each FOB offer received from various bidders (depending on selected loadport/shipping coordinates entered by a bidder) in Table 4:

Table 4

| | |
|---|---|
| FOB offer Party A | Freight: 3.20/MT |
| FOB offer Party C | Freight: 4.50/MT |
| FOB offer Party E | No Ship available |

Considering the above, the final FOB + Freight price becomes as below in the system in Table 5.

**Table 5**

| Party Name | CFR Option (means FOB + Freight value)^ | FOB Option* |
|---|---|---|
| A | Premium 2.05 / MT (FOB 0.50 + Freight 1.55) | Discount 2.70/MT |
| B | Premium 2.99 / MT (FOB 0.90 + Freight 2.09) | - |
| C | Premium 3.11 / MT (FOB 1.11 + Freight 2.00) | Discount 3.00/MT |
| D | Premium 2.99 / MT (FOB 0.90 + Freight 2.09) | - |
| E | - | Cannot be evaluated |
| ^This bifurcation is submitted by bidder on portal in given slots. | | |

**Role of Voyage Days:**

Normally XYZ FIRM requires 30 days-time to make the payment for imports. Assessment of Voyage days helps in identification of actual period for which credit is being passed on by a Bidder to XYZ FIRM (Credit period = 30 days minus Journey or Voyage days of ship). For this credit period, suitable benefit is given to each Bidder by the system. In case of CFR offers, voyage days are to be considered from the database where these are pre-defined.

In case of FOB offers, voyage days are entered by shipping department(s) and are considered by the system accordingly. Voyage days for each FOB offer differs based on different loading location chosen by each bidder across the globe.

**Tax on freight**

In case there is a tax (e.g., GST) applicable on freight and defined in the database, the system takes into consideration the freight tax cost for XYZ FIRM while calculating top three best bids. In such cases there is a separate slot along with Premium/Discount slot on Bidding floor seeking entry of freight by the bidders mentioning that in absence of this freight, 10% of Bid value shall be considered as freight for tax calculation.

**Identification of top three bids by the system for Auction**

Considering all the above factors, system identifies best three bids (Concept: three different bids of three different parties).

Let's assume Payment period is 30 days (Bill of Lading date is day (zero)), as required by XYZ FIRM. Applicable Interest rate is 3%. Normal CFR voyage days are 10. Voyage days for FOB offer of Party A are 7 days and Party C are 9 days. As mentioned above, base price of LPG Propane is assumed as 400/MT and LPG Butane is 500/MT. Also, the tax applicable on freight for CFR cargoes shall be say 5% (for FOB freight tax is assumed to be inbuilt in freight provided by shipping).

Then, the Net Landed Price (i.e., the net delivered price) of these 4 parties are determined as illustrated in Table 6.

Table 6

| Party Name | CFR Option | FOB Option* |
|---|---|---|
| A | 442.565 / MT | 443.192 / MT |
| B | 443.531 / MT | - |
| C | 443.646 / MT | 443.632 / MT |
| D | 443.531 / MT | - |

In one exemplary embodiment, the Net Delivered Price for each delivery option may be determined as:

Base quote applicable to the tender as per published reference reports + Premium/(Discount) offered by Bidder + Applicable Freight for the loadport (in case of FOB offers) +/- Additional adjustment for special freight applicable to particular ports + Adjustment for tax (e.g., GST) on freight if applicable - Credit period offered by the Bidder considering applicable voyage days from Load port to Discharge port.

Thus, the offers that will be selected by the system for being eligible for Reverse Auctioning shall be as below.

1st: 442.565 / MT - CFR of Party A
2nd: 443.192 / MT - FOB of Party A
3rd: 443.531/ MT - CFR of Party B (Tied)
4th: 443.531/MT - CFR of Party D (Tied)

With above three different offers and three different parties are reached. Hence, system will not consider other offers for auctioning.

**Auctioning**

In case of per MT cases, minimum improvement basic factor is 0.10 /MT and for per Barrel cases it is 0.01/Barrel, as predefined in the system.

This means that even if a party is best for a cargo, the system will still show it a minimum improvement of 0.10/MT. This is explained in tender document. For second best bid, the minimum improvement for each Cargo ID shall be calculated as follows:

$$\text{Net price of the best bid - Net Price of second best bid} + 0.10/\text{MT}$$

So whereas for best offer (CFR) of Party A, the system will show minimum improvement requirement of 0.10/MT indicating that it is so far the best offer, for FOB offer (which is second best) of Party A, the system will show minimum improvement requirement of 0.73/MT (i.e. 443.192 - 442.565 + 0.10).

Similarly, for third best offer minimum improvement shall be 1.07/MT (for both tied cases).

All participating bidders have several opportunities during auction window, to become the best.

The Minimum improvement is calculated by the system based on back calculation of required adjustment in Premium/Discount quoted by party considering multiple variables involved and starting with net price as the basis of difference.

Any improvement less then minimum improvement indicated by the system is not accepted by the system.

Parties may continue to improve equal to or more than minimum improvement till the time auction continues.

There shall be one fixed round of auction for 10 minutes. In case a party improves in last 1 minute (10th minute) of fixed round, auction will move to variable round which shall be for 15 more minutes. However, in case of no improvement in this variable round for more than 3 minutes, the auction will come to an end. Hence, parties will get more chances for improvement and XYZ FIRM more scope for auction benefit.

In case there is a tie before auction among best parties (top parties), as soon as one of them improves, tie shall be broken as per system design as system will not allow a tie after improvement. Also, two or more bidders cannot input a value at exact time as per system design as it records data entry time upto 5th decimal place of a second.

The above is only one of the examples. The auctioning calculation is different for different products. Also, there are cases where there may be more cargoes in one tender comprising individual/combined cargo(es).

Also, there may be a case where credit period which is normally 30 days in tenders may be allowed more than 30 days by XYZ FIRM. In such cases the calculation becomes more complicated and system is designed to take care of the same before arriving at best offers/bidders for auction eligibility.

**Price Acceptance**

Once the auction is over, the best price is advised by the system to indenting/price accepting department for necessary decision in the system. Till price is accepted/rejected in the system, no details of offers received are divulged by the system to any user.

**Comparative statement/Approval/Award**

The comparative statement, cancellation/finalization approval and award are prepared by the system itself in a synchronized manner as per alignment of events pre-defined in the system. Non-awarded parties receive the auto-generated regret message from the system as soon as award is sent by the system (as a simultaneous activity).

**Example 2 - Exports**

Product X to be exported during the period 01-03-2022 to 03-03-2022 with quantity 35 TMT +/-10% At Buyer's Option ex-Chennai.

Five parties submitted bids (Before Auction) as below in table 7.

| SL. | PARTY | DISCOUNT (-) / PREMIUM (US$) | Base Price (US$) | GROSS PRICE (US$) | PAYMENT TERM DAYS | PAYMENT MODE (US$) | EFFECT OF CREDIT PERIOD DAYS | EFFECT OF CREDIT PERIOD (US$) | NET PRICE |
|---|---|---|---|---|---|---|---|---|---|
| 1 | ABC Ltd | 14.26 / MT | 575.393 / MT | 589.652 / MT | Open Credit / Telegraphic Transfer (T/T) | At Sight | 5 | 0.000 / MT | 589.652 / MT |
| 2 | MMM Ltd | 13.51 / MT | 575.393 / MT | 588.902 / MT | Open Credit / Telegraphic Transfer (T/T) | At Sight | 5 | 0.000 / MT | 588.902 / MT |
| 3 | EDF Ltd | 13.09 / MT | 575.393 / MT | 588.483 / MT | Open Credit / Telegraphic Transfer (T/T) | Credit 30 days after B/L date (BL=0) | 30 | 0.692 / MT^ | 587.791 / MT |
| 4 | CPP Ltd | 12.75 / MT | 575.393 / MT | 588.142 / MT | Confirmed Letter of Credit (CLC) | Credit 30 days after B/L date (BL=0) | 30 | 0.691 / MT^ | 587.451 / MT |
| 5 | JMT Ltd | 11.11 / MT | 575.393 / MT | 586.502 / MT | Confirmed Letter of Credit (CLC) | At Sight | 5 | 0.000 / MT | 586.502 / MT |

*^Calculated as (30 credit days − 5 standard credit days)/365 days\*Gross Price per MT \*Interest rate. For 5 standard days credit is considered zero*

Table 7

Here, ABC Ltd has the maximum Premium and is also the best party before Auction. Moreover, ABC Ltd, MMM Ltd and EDF Ltd are invited for Forward Auction by the system. However, the post auction position is as below in Table 8.

| SL. | PARTY | DISCOUNT (-) / PREMIUM (US$) | Base Price (US$) | GROSS PRICE (US$) | PAYMENT TERM DAYS | PAYMENT MODE (US$) | EFFECT OF CREDIT PERIOD DAYS | EFFECT OF CREDIT PERIOD (US$) | NET PRICE |
|---|---|---|---|---|---|---|---|---|---|
| 1 | ABC Ltd | 14.64 / MT | 575.393 / MT | 590.033 / MT | Open Credit / Telegraphic Transfer (T/T) | At Sight | 5 | 0.000 / MT | 590.033 / MT |
| 2 | EDF Ltd | 15.26 / MT | 575.393 / MT | 590.653 / MT | Open Credit / Telegraphic Transfer (T/T) | Credit 30 days after B/L date (BL=0) | 30 | 0.694 / MT | 589.958 / MT |
| 3 | MMM Ltd | 13.51 / MT | 575.393 / MT | 588.903 / MT | Open Credit / Telegraphic Transfer (T/T) | At Sight | 5 | 0.000 / MT | 588.902 / MT |
| 4 | CPP Ltd | 12.75 / MT | 575.393 / MT | 588.143 / MT | Confirmed Letter of Credit (CLC) | Credit 30 days after B/L date (BL=0) | 30 | 0.692 / MT | 587.451 / MT |
| 5 | JMT Ltd | 11.11 / MT | 575.393 / MT | 586.503 / MT | Confirmed Letter of Credit (CLC) | At Sight | 5 | 0.001 / MT | 586.502 / MT |

Table 8

Here the improvements were made by ABC Ltd & EDF Ltd during Auction. However, despite the fact that EDF Ltd improved Premium (15.64/MT) became more than that of ABC Ltd (14.64/MT), basis the improvement advised by system, the effect of credit period being 0.694/MT, still ABC Ltd was awarded.

Hence, Premium/Discount is not the only criteria and several other factors are considered in the auction methodology ascertaining improvement required, as previously discussed.

Additionally, the various embodiments of the present invention provide numerous technical advancements such as:

• There are neither any absolute private values nor any common values as benchmarks.

• "Net Delivered Price" in both cases, i.e., during forward/reverse auctioning remains in the background instead of disclosing the same.

- The complete auction/bidding process is conducted based on "premium/discount" per unit without any direct reference to absolute values. Further, the auctioneers shall not be able to ascertain the actual best bid price, thereby maintaining the secrecy and confidentiality of bids received.

- A provision to compete amongst auctioneers' own bids for same cargo having multiple delivery options.

- Involves a close contour of back-calculation based on multiple factors to derive "minimum bid improvement" value required, and then once again forward calculates the requirements to establish that the calculation is correctly done such that the existing best bidder gets defeated.

- No manual interference at any stage till the best party is achieved after auctioning.

- In view of short duration of e-tendering process, sharp quotes received by a tender floating entity, which leads to considerable savings in time and efforts for the entity as well as the bidders.

- Immense flexibility in finalizing tender opening/validity timings as well as ease in conducting multiple tenders during the day.

- Scope available for further reduction of validity period, as per requirement.

Additionally, the present invention provides for a number of commercial benefits such as:

**High and Repetitive:** The value of petroleum products involved is very high for each tender. There are large number of export / import tenders undertaken during the year. The commercial benefits from the same would be high as the system shall bring out the margins, built-in the quoted Premium/Discount by the bidders, the opportunity for which is not available otherwise.

The auctioning methodology keeps the identity of best offer including best rates achieved intact, as different factors affecting the calculation during auction/ calculation of minimum improvement required are not exactly known to the bidders. Moreover, different set of parties may have different variables affecting their net delivered price per unit or weighted average net delivered price per unit.

**Strategic importance of the present subject matter:**

International tendering requires maintaining secrecy and confidentiality of the bids received and finalized at all times. As major oil companies across the globe take part in the international tendering process, it is required by them that their offers are not disclosed and finalized rates/party are not divulged to others as this may adversely affect their other ongoing dealings. Therefore, the best price against a tender could not be disclosed in auction window. At the same time, it was desired to take maximum benefit of the auction process. Accordingly, the methodology was designed to take care of above requirement together with achieving maximum benefit from auctioning.

The present auctioning methodology provides for a back-calculation technique from comparison of net delivered price per unit or weighted average net delivered price per unit (best offer vs other than best offer) to arrive at an appropriate "minimum improvement factor" value which will make the other than best offer as the best offer.

**Claims**

1.  A system (102) to process bid offers based on a minimum improvement value, the system (102) comprising:

    a registration module (202) to register a plurality of users for receiving bid offers associated with a tender;
    a tender creation module (204) to create the tender based on one or more input parameters received from the plurality of users;
    a bid processing module (208) to:

    receive a plurality of bid offers from the plurality of users for the tender;
    identify at least two bid offers, from the plurality of bid offers, based on a net delivered price value corresponding to each of the plurality of bid offers, wherein the bid processing module (208) is configured to determine the net delivered price value corresponding to each of the plurality of bid offers based on quantity of product in the tender, credit period, freight, base quotes for the bid offers, tax, and special port charges; and
    verify a bid bond requirement for the plurality of users before receiving one or more input parameters from the plurality of users associated with the bid offers; and
an auctioning module (210) to:

send an invite to at least two users associated with the at least two bid offers related to the tender for auction;
determine, for each of the at least two users, the minimum improvement value based on the bid offer of the corresponding user, a best bid offer among the at least two bid offers, and a predefined improvement factor, to be provided to each of the at least two users, wherein the predefined improvement factor is indicative of a minimum change required in the bid offer to match the best bid offer in the auction;
receive, from a user of the at least two users, a revised bid offer based on the minimum improvement value; and
determine, for each of the at least two users, a revised minimum improvement value based on the revised bid offer received from the user to receive another revised bid offer from the at least two users.

2. The system (102) as claimed in claim 1, wherein the one or more input parameters correspond to an input for loadport, offer laydays, country of origin, and shipping co-ordinates when the tender corresponds to an import order.

3. The system (102) as claimed in claim 1, comprising a communication module (206) to select a user, from the plurality of users, to invite bid offers for the tender based on a category of a product associated with the tender.

4. The system (102) as claimed in claim 1, comprising a bid acceptance module (212) to determine an acceptance bid offer from one of the at least two users based on the revised bid offer and the other revised bid offer.

5. The system (102) as claimed in claim 1, wherein the auctioning module (210) is configured to determine the minimum improvement value based on quantity of product, credit period, freight, base quotes for the bid offers, tax, and special port charges.

6. The system (102) as claimed in claim 1, wherein two bid offers of the at least two bid offers correspond to a specific user of the plurality of users, and wherein each of the two bid offers associated with a different delivery option for the tender.

7. The system as claimed in claim 1, wherein the auctioning module (210) is configured to:

receive the revised bid offer within a predefined time period for auction; and
extend the predefined time period for auction to receive the other revised bid offer when the revised bid offer is received during a specified duration of the predefined time period.

8. A method (300) for processing bid offers based on a minimum improvement value, the method (300) comprising:

registering (302), by a registration module (202) of a system (102), a plurality of users for receiving bid offers associated with a tender;
creating (304), by a tender creation module (204) of the system (102), the tender based on one or more input parameters received from the plurality of users;
receiving (308), by a bid processing module (208) of the system (102), a plurality of bid offers from the plurality of users for the tender;
verifying, by the bid processing module (208) of the system (102), a bid bond requirement for the plurality of users before receiving one or more input parameters from the plurality of users associated with the bid offers;
identifying (310), by the bid processing module (208) of the system (102), at least two bid offers, from the plurality of bid offers, based on a net delivered price value corresponding to each of the plurality of bid offers, wherein the net delivered price value corresponding to each of the plurality of bid offers is determined based on quantity of product in the tender, credit period, freight, base quotes for the bid offers, tax, and special port charges;
sending (312), by an auctioning module (210) of the system (102), an invite to at least two users associated with the at least two bid offers related to the tender for auction;
determining (314), by the auctioning module (210) of the system (102), for each of the at least two users, the minimum improvement value based on the bid offer of the corresponding user, a best bid offer among the at least two bid offers, and a predefined improvement factor, to be provided to each of the at least two users, wherein the predefined improvement factor is indicative of a minimum change required in the bid offer to match the best bid offer in the auction;
receiving (318), by the auctioning module (210) of the system (102), from a user of the at least two users, a revised bid offer based on the minimum improvement value; and

determining (324), by the auctioning module (210) of the system (102), for each of the at least two users, a revised minimum improvement value based on the revised bid offer received from the user to receive another revised bid offer from the at least two users.

## Patentansprüche

1. System (102) zur Verarbeitung von Angeboten basierend auf einem Mindestverbesserungswert, das System (102) umfassend:

ein Registrierungsmodul (202) zur Registrierung einer Vielzahl von Benutzern für den Empfang von Angeboten im Zusammenhang mit einer Ausschreibung;

ein Modul zur Ausschreibungserstellung (204) zum Erstellen der Ausschreibung basierend auf einem oder mehreren Eingabeparametern, die von der Vielzahl von Benutzern empfangen wurden;

ein Angebotsbearbeitungsmodul (208) zum:

Empfangen einer Vielzahl von Angeboten von einer Vielzahl von Benutzern für die Ausschreibung;

Identifizieren von mindestens zwei Angeboten aus einer Vielzahl von Angeboten basierend auf einem Netto-Lieferpreis, der jedem der Angebote entspricht, wobei das Angebotsbearbeitungsmodul (208) konfiguriert ist, um den Netto-Lieferpreis für jedes der Angebote basierend auf der Produktmenge in der Ausschreibung, der Zahlungsfrist, den Frachtkosten, den Basispreisen für die Angebote, der Steuer und den besonderen Hafengebühren zu bestimmen; und

Überprüfen einer Bietungsgarantieanforderung für die Vielzahl von Benutzern, bevor ein oder mehrere Eingabeparameter von der Vielzahl von Benutzern empfangen werden, die mit den Angeboten verbunden sind; und

ein Auktionsmodul (210) zum:

Senden einer Einladung an mindestens zwei Benutzer, die mit den mindestens zwei Angeboten im Zusammenhang mit der Ausschreibung zur Auktion verknüpft sind;

Bestimmen des Mindestverbesserungswerts für jeden der mindestens zwei Benutzer basierend auf dem Angebot des entsprechenden Benutzers, dem besten Angebot unter den mindestens zwei Angeboten und einem vordefinierten Verbesserungsfaktor, der jedem der mindestens zwei Benutzer mitgeteilt wird, wobei der vordefinierte Verbesserungsfaktor die Mindeständerung angibt, die am Angebot erforderlich ist, um dem besten Angebot in der Auktion zu entsprechen;

Empfangen eines überarbeiteten Angebots von einem der mindestens zwei Benutzer basierend auf dem Mindestverbesserungswert; und

Bestimmen eines überarbeiteten Mindestverbesserungswerts für jeden der mindestens zwei Benutzer basierend auf dem von diesem Benutzer erhaltenen überarbeiteten Angebot, um ein weiteres überarbeitetes Angebot von den mindestens zwei Benutzern zu erhalten.

2. System (102) nach Anspruch 1, wobei der eine oder die mehreren Eingabeparameter einer Eingabe für den Ladehafen, die angebotenen Ladezeiträume, das Herkunftsland und die Versandkoordinaten entsprechen, wenn die Ausschreibung einem Importauftrag entspricht.

3. System (102) nach Anspruch 1, umfassend ein Kommunikationsmodul (206) zur Auswahl eines Benutzers aus der Vielzahl von Benutzern, um basierend auf einer mit der Ausschreibung verbundenen Produktkategorie Angebote für die Ausschreibung einzuholen.

4. System (102) nach Anspruch 1, umfassend ein Angebotsannahmemodul (212) zum Bestimmen einer Angebotsannahme von einem der mindestens zwei Benutzer basierend auf dem überarbeiteten Angebot und dem anderen überarbeiteten Angebot.

5. System (102) nach Anspruch 1, wobei das Auktionsmodul (210) konfiguriert ist, um den Mindestverbesserungswert basierend auf der Produktmenge, der Zahlungsfrist, den Frachtkosten, den Basispreisen für die Angebote, der Steuer und den besonderen Hafengebühren zu bestimmen.

6. System (102) nach Anspruch 1, wobei zwei der mindestens zwei Angebote einem bestimmten Benutzer aus der Vielzahl von Benutzern zugeordnet sind und wobei jedes der beiden Angebote einer anderen Lieferoption für die Ausschreibung zugeordnet ist.

7. System nach Anspruch 1, wobei das Auktionsmodul (210) konfiguriert ist, um:

   das überarbeitete Angebot innerhalb eines vordefinierten Zeitraums für die Auktion zu empfangen; und
   die vordefinierte Auktionsdauer zu verlängern, um das andere überarbeitete Angebot zu empfangen, wenn das überarbeitete Angebot während eines bestimmten Zeitraums innerhalb der vordefinierten Auktionsdauer eingeht.

8. Verfahren (300) zur Verarbeitung von Angeboten basierend auf einem Mindestverbesserungswert, das Verfahren (300) umfassend:

   Registrieren (302) einer Vielzahl von Benutzern durch ein Registrierungsmodul (202) eines Systems (102) zum Empfang von Angeboten, die mit einer Ausschreibung verbunden sind;
   Erstellen (304) durch ein Modul zur Ausschreibungserstellung (204) des Systems (102) der Ausschreibung basierend auf einem oder mehreren Eingabeparametern, die von der Vielzahl von Benutzern empfangen wurden;
   Empfangen (308) einer Vielzahl von Angeboten von einer Vielzahl von Benutzern für die Ausschreibung durch ein Angebotsbearbeitungsmodul (208) des Systems (102);
   Überprüfen durch das Angebotsbearbeitungsmodul (208) des Systems (102), ob für die Vielzahl von Benutzern eine Bietungsgarantie erforderlich ist, bevor ein oder mehrere Eingabeparameter von der Vielzahl von Benutzern empfangen werden, die mit den Angeboten in Verbindung stehen;
   Identifizieren (310) durch das Angebotsbearbeitungsmodul (208) des Systems (102) mindestens zwei Angebote aus der Vielzahl von Angeboten basierend auf einem Netto-Lieferpreis, der jedem der Vielzahl von Angeboten entspricht, wobei der jedem der Vielzahl von Angeboten entsprechende Netto-Lieferpreis basierend auf der Produktmenge in der Ausschreibung, der Zahlungsfrist, den Frachtkosten, den Basispreisen für die Angebote, der Steuer und den besonderen Hafengebühren bestimmt wird;
   Senden (312) einer Einladung durch ein Auktionsmodul (210) des Systems (102) an mindestens zwei Benutzer, die mit den mindestens zwei Angeboten im Zusammenhang mit der Ausschreibung zur Auktion verbunden sind;
   Bestimmen (314) durch das Auktionsmodul (210) des Systems (102) für jeden der mindestens zwei Benutzer den Mindestverbesserungswert basierend auf dem Angebot des entsprechenden Benutzers, einem besten Angebot unter den mindestens zwei Angeboten und einem vordefinierten Verbesserungsfaktor, der jedem der mindestens zwei Benutzer bereitgestellt werden soll, wobei der vordefinierte Verbesserungsfaktor eine minimale Änderung angibt, die im Angebot erforderlich ist, um dem besten Angebot in der Auktion zu entsprechen;
   Empfangen (318) eines überarbeiteten Angebots basierend auf dem Mindestverbesserungswert durch das Auktionsmodul (210) des Systems (102) von einem der mindestens zwei Benutzer; und
   Bestimmen (324) eines überarbeiteten Mindestverbesserungswerts durch das Auktionsmodul (210) des Systems (102) für jeden der mindestens zwei Benutzer basierend auf dem von dem Benutzer erhaltenen überarbeiteten Angebot, um ein weiteres überarbeitetes Angebot von den mindestens zwei Benutzern zu erhalten.

**Revendications**

1. Un système (102) de traitement des offres d'achat basées sur une valeur d'amélioration minimale, le système (102) comprenant :

   un module d'enregistrement (202) pour enregistrer une pluralité d'utilisateurs afin de recevoir des offres d'achat associées aux offres d'achat publique ;
   un module de création d'offres d'achat publique (204) pour créer les d'offres d'achat publique sur la base d'un ou plusieurs paramètres d'entrée reçus de la pluralité des utilisateurs ;
   un module de traitement des offres (208) à :

   recevoir une pluralité d'offres d'achat de la part d'une pluralité d'utilisateurs pour l'appel d'offres d'achat publique ;
   identifier au moins deux offres d'achat parmi la pluralité d'offres, sur la base d'un prix net livré correspondant à chacune des offres d'achat, le module de traitement des offres (208) étant configuré pour déterminer le prix net livré correspondant à chacune des offres d'achat en fonction de la quantité de produit dans l'appel d'offres d'achat, de période de crédit, du fret, des prix de base des offres d'achat, des taxes et des frais portuaires spéciaux ; et

vérifier l'exigence de cautionnement de soumission pour la pluralité d'utilisateurs avant de recevoir un ou plusieurs paramètres d'entrée de la pluralité d'utilisateurs associés aux offres de soumission; et

un module de vente aux enchères (210) à :

envoyer une invitation à au moins deux utilisateurs associés aux au moins deux offres relatives à l'appel d'offres pour la vente aux enchères ;

déterminer, pour chacun des au moins deux utilisateurs, la valeur d'amélioration minimale basée sur l'offre d'achat de l'utilisateur correspondant, une meilleure offre d'achat parmi les au moins deux offres d'achat, et un facteur d'amélioration prédéfini, à fournir à chacun des au moins deux utilisateurs, dans lequel le facteur d'amélioration prédéfini est indicatif d'un changement minimal requis dans l'offre d'achat pour correspondre à la meilleure offre d'achat dans la vente aux enchères ;

recevoir, d'un utilisateur parmi au moins deux utilisateurs, une offre d'achat révisée basée sur la valeur d'amélioration minimale ; et

déterminer, pour chacun des au moins deux utilisateurs, une valeur d'amélioration minimale révisée basée sur l'offre d'achat révisée reçue de l'utilisateur pour recevoir une autre offre révisée de la part des au moins deux utilisateurs.

2. Le Système (102) tel que revendiqué dans la revendication 1, dans lequel un ou plusiers des paramètres d'entrée correspondent à une entrée pour le port de chargement, les jours de mise en service de l'offre, le pays d'origine et les coordonnées d'expédition lorsque l'appel d'offres correspond à une commande d'importation.

3. Le Système (102) tel que revendiqué dans la revendication 1, comprenant un module de communication (206) pour sélectionner un utilisateur, parmi la pluralité d'utilisateurs, afin d'inviter des offres pour l'appel d'offres d'achat sur la base d'une catégorie de produit associée à l'appel d'offres d'achat.

4. Le système (102) tel que revendiqué dans la revendication 1, comprenant un module d'acceptation d'offre (212) pour déterminer une offre d'acceptation de l'un des au moins deux utilisateurs sur la base de l'offre d'achat révisée et de l'autre offre révisée.

5. Le système (102) tel que revendiqué dans la revendication 1, dans lequel le module d'enchères (210) est configuré pour déterminer la valeur d'amélioration minimale en fonction de la quantité de produit, de la période de crédit, du fret, des devis de base pour les offres, des taxes et des frais portuaires spéciaux.

6. Le système (102) tel que revendiqué dans la revendication 1, dans lequel deux des au moins deux offres d'entre les offres correspondent à un utilisateur spécifique de la pluralité d'utilisateurs, et dans lequel chacune des deux offres d'entre les offres est associée à une option de livraison différente pour l'appel d'offres d'achat publique.

7. Le système tel que revendiqué dans la revendication 1, dans lequel le module d'enchères (210) est configuré pour :

recevoir l'offre révisée dans un délai prédéfini pour la vente aux enchères ; et

prolonger le délai prédéfini pour la vente aux enchères afin de recevoir l'autre offre révisée lorsque l'offre révisée est reçue pendant une durée spécifiée de la période de temps prédéfinie.

8. Procédé (300) de traitement des offres d'achat fondé sur une valeur d'amélioration minimale, le procédé (300) comprenant :

l'enregistrement (302), par un module d'enregistrement (202) du système (102), d'une pluralité d'utilisateurs pour recevoir des offres associées à un appel d'offres d'achat;

créant (304), par un module de création d'appel d'offres (204) du système (102), l'appel d'offres basé sur un ou plusieurs paramètres d'entrée reçus de la pluralité des utilisateurs ;

recevant (308), par un module de traitement des offres (208) du système (102), une pluralité des offres d'achat provenant de la pluralité d'utilisateurs pour l'appel d'offres ;

vérifiant, par le module de traitement des offres (208) du système (102), une exigence de cautionnement d'offre pour la pluralité d'utilisateurs avant de recevoir un ou plusieurs paramètres d'entrée de la pluralité d'utilisateurs associés aux offres d'achat ;

identifiant (310), par le module de traitement des offres (208) du système (102), au moins deux offres, parmi la pluralité d'offres d'achat, sur la base d'une valeur de prix net livré correspondant à chacune des offres publique d'achat, où la valeur de prix net livré correspondant à chacune des offres d'achat est déterminée en fonction de la quantité de produit dans l'appel d'offres, de la période de crédit, du fret, des devis de base pour les offres, des taxes et des frais portuaires spéciaux ;

l'envoi (312), par un module d'enchères (210) du système (102), d'une invitation à au moins deux utilisateurs associés aux au moins deux offres d'enchères liées à l'appel d'offres d'enchères;

déterminant (314), par le module d'enchères (210) du système (102), pour chacun des au moins deux utilisateurs, la valeur d'amélioration minimale basée sur l'offre d'achat de l'utilisateur correspondant, une meilleure offre d'enchères parmi les au moins deux offres d'achat et un facteur d'amélioration prédéfini, à fournir à chacun des au moins deux utilisateurs, dans lequel le facteur d'amélioration prédéfini est indicatif d'un changement minimal requis dans l'offre d'achat pour correspondre à la meilleure offre lors de la vente aux enchères;

recevant (318), par le module d'enchères (210) du système (102), d'un utilisateur parmi au moins deux utilisateurs, une offre d'achat révisée basée sur la valeur d'amélioration minimale ; et

déterminant (324), par le module d'enchères (210) du système (102), pour chacun des au moins deux utilisateurs, une valeur d'amélioration minimale révisée basée sur l'offre d'achats révisée reçue de l'utilisateur pour recevoir une autre offre d'achats révisée des au moins deux utilisateurs.

Figure 1

Figure 2

300

Registering a plurality of users for receiving bid offers associated with a tender

302

Creating a tender based on one or more input parameters received from the plurality of users

304

Selecting a user from the plurality of users to invite bid offers for the tender

306

Receiving a plurality of bid offers from the plurality of users for the tender

308

Identifying at least two bid offers, from the plurality of bid offers, based on a net delivered price value corresponding to each of the plurality of bid offers

310

Sending an invite to at least two users associated with the at least two bid offers related to the tender for auction

312

A

Figure 3A

A

Determining, for each of the at least two users, a minimum improvement value for the bid offer — 314

Displaying the minimum improvement factor for each of the at least two users — 316

Receiving, from a user of the at least two users, a revised bid offer based on the minimum improvement value — 318

Whether revised bid offer received within a specific time? 320

No → Determine Acceptance Bid — 326

↓

Stop

Yes

Extend the predefined time period by a predetermined time — 322

Determining, for each of the at least two users, a revised minimum improvement value based on the revised bid offer — 324

Figure 3B

400

**Forward Auction**

Select Auction ID :  2017_EXP_144_FO_14 ▾  Close Time : 25/05/2017 13.00.00

| Cargo | Product | Quantity | Loadport | Laydays | Your Quote in Tender (US$) | Product-Wise Net Price(US$) | Cargo-Wise Net Price (US$) |
|---|---|---|---|---|---|---|---|
| A | FUEL OIL (FO) [MOCK] | 33-66 TMT At Buyer's Option | VIZAG | 27-05-2017 - 31-05-2017 | 50.00/MT | 70.000/MT | 70.000/MT |

| Cargo | Minimum Bid Improvement Required (US$/UOM) | Your bid improvement (US$/UOM) | |
|---|---|---|---|
| A | 0.01 | | Submit |

**Effect of Forward e-Auction**

| Cargo | Product | Quantity | Loadport | Laydays | Your Revised Quote after Bid Improvement (US$) | RevisedProduct-Wise Net Price (US$) | RevisedCargo-Wise Net Price(US$) |
|---|---|---|---|---|---|---|---|
| A | FUEL OIL (FO) [MOCK] | 33-66 TMT At Buyer's Option | VIZAG | 27-05-2017 - 31-05-2017 | 52.36/MT | 72.360/MT | 72.360/MT |

Figure 4

**Reverse Auction Master**

| Reverse Auction Configuration | | | |
|---|---|---|---|
| Select UOM | | | USD/MT ▼ |
| Select Number of Rounds | | | 3 ▼ |
| Round | Tenure (In Minutes) | Auto Extension Activation Time (In Secs.) | Minimum Improvement Factor (In US$/UOM) |
| 1 | 10 | 60 | 0.01 |
| 2 | 5 | 60 | 0.01 |
| 3 | 5 | 60 | 0.01 |

| Idle Time Configuration | | ☑ Enable |
|---|---|---|
| Idle Time (In Minutes) | Minimum Improvement Factor (In US$/UOM) | Closing Time after the scheduled round(s) (In Minutes) |
| 3 | 0.01 | 20 |

Figure 5

600

**Scenario- I**

| Bidder | Delivery Term | Position |
|--------|---------------|----------|
| B-01 | DAP | LY1 |
| B-02 | DAP | LY1 |
| B-03 | DES | LY1 |
| B-05 | CFR | LY1 |
| B-07 | DES | LY1 |
| B-08 | CFR | LY1 |
| B-09 | DAP | LY1 |
| B-01 | DES | LY2 |
| B-02 | CFR | LY2 |
| B-03 | DAP | LY2 |
| B-04 | CIF | LY2 |
| B-07 | CFR | LY2 |
| B-08 | DES | LY2 |
| B-09 | DES | LY2 |
| B-10 | DES | LY3 |
| B-11 | CFR | LY3 |
| B-12 | CIF | LY3 |
| B-13 | CIF | LY3 |
| B-14 | CIF | LY3 |
| B-15 | DAP | LY3 |

**Scenario- II**

| Bidder | Delivery Term | Position |
|--------|---------------|----------|
| B-01 | DAP | LY1 |
| B-05 | DAP | LY2 |
| B-01 | DES | LY3 |
| B-01 | CFR | LY4 |
| B-05 | DES | LY5 |
| B-05 | CFR | LY6 |
| B-03 | DAP | LY7 |
| B-04 | DAP | LY8 |
| B-02 | DES | LY9 |
| B-01 | CIF | LY10 |
| B-02 | CFR | LY12 |
| B-05 | CIF | LY13 |
| B-04 | DES | LY16 |
| B-03 | DES | LY17 |
| B-03 | CFR | LY18 |
| B-03 | CIF | LY19 |
| B-04 | CIF | LY20 |
| B-02 | CIF | LY21 |
| B-02 | DAP | LY22 |
| B-04 | CFR | LY23 |

**Scenario- III**

| Bidder | Delivery Term | Position |
|--------|---------------|----------|
| B-01 | DAP | LY1 |
| B-04 | CFR | LY2 |
| B-01 | DES | LY3 |
| B-03 | CFR | LY4 |
| B-01 | CFR | LY5 |
| B-03 | DAP | LY6 |
| B-05 | DES | LY8 |
| B-04 | DAP | LY10 |
| B-02 | DES | LY12 |
| B-01 | CIF | LY13 |
| B-05 | CFR | LY15 |
| B-02 | CFR | LY16 |
| B-05 | CIF | LY17 |
| B-04 | DES | LY18 |
| B-03 | DES | LY19 |
| B-03 | CIF | LY21 |
| B-04 | CIF | LY22 |
| B-02 | CIF | LY23 |
| B-02 | DAP | LY24 |
| B-05 | DAP | LY25 |

**Scenario- IV**

| Bidder | Delivery Term | Position |
|--------|---------------|----------|
| B-01 | DES | LY1 |
| B-03 | DAP | LY2 |
| B-04 | CFR | LY3 |
| B-01 | DAP | LY6 |
| B-05 | DES | LY8 |
| B-04 | DAP | LY10 |
| B-01 | CFR | LY11 |
| B-02 | DES | LY12 |
| B-01 | CIF | LY13 |
| B-05 | CFR | LY15 |
| B-02 | CFR | LY16 |
| B-05 | CIF | LY17 |
| B-04 | DES | LY18 |
| B-03 | DES | LY19 |
| B-03 | CFR | LY20 |
| B-03 | CIF | LY21 |
| B-04 | CIF | LY22 |
| B-02 | CIF | LY23 |
| B-02 | DAP | LY24 |
| B-05 | DAP | LY25 |

Figure 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140172614 A1
- WO 2002042981 A1
- US 2016232603 A1
- WO 2006019986 A2
- US 2013218708 A1